# EUROPEAN PATENT APPLICATION

(11) **EP 0 626 692 A2**
(43) Date of publication of application: **30.11.1994**
(21) Application number: 94850093.9
(22) Date of filing: 25.05.1994
(51) Int. Cl.: G11B 33/04

(54) **A transport and storage cover for flat objects such as compact discs and data diskettes and a method for manufacturing such covers**

(30) Priority: 27.05.1993 SE 9301826
(71) Applicant: ANNONSREKLAM I TROLLHÄTTAN AB, S-461 98 Trollhättan (SE)
(72) Inventor: Johansson, Rolf, S-461 98 Trollhättan (SE)
(74) Representative: Roth, Ernst Adolf Michael

(57) **Abstract**

A transport and storage cover for flat, brittle objects, such as compact discs and data diskettes, incorporating a comparatively shape stiff, multi-layer plate (15), which in one of its flat sides is provided with an opening (7,4) with an outer dimension and shape (7) substantially corresponding to the outer dimension and shape of an object (16) intended to be positioned in said opening, the depth of the opening (7,4) being substantially equal to the thickness of an object, that the inner part of the opening (4) is congruent with the outer part of the opening (7) but is somewhat bigger than this, and that at the outer part of the opening (7) there is at least one tab (8) or flap (9) projecting inwards, and adapted to contribute to the retainment of the object positioned in the opening.

## Description

### Background of the invention

The invention refers to a transport and storage cover for flat, fragile objects, such as compact discs and data diskettes and also to method for manufacturing such covers.

With the ever increasing datorization of the society the number of data diskettes to be handled is also increased.

Handling of compact discs for music recordings, information storage and the like, is also increasing in the smae manner.

Such diskettes and discs are rather sensible to outer damage, and at data diskettes particularly in the area of the "shutter", i.e. the movable metal cover, which protects the aperture in the plastic housing of the diskette, and discs and diskettes therefore should be handled thus that they will not be cracked or damaged in other way by impacts or pressure.

With the increasing demand of conveyance of such discs and diskettes there is a requirement for an appropriate transport package, whereby earlier used padded envelopes and blister packs certainly give a rather good protection, but are comparatively bulky and furthermore allow disc, diskette or diskettes to move within the package, which is less desirable. Particularly within modern postal handling with franking machines it is of utmost importance that the parcel is completely planar, as otherwise the machines can not produce correct prints. If the object in the parcel is not positioned in an accurately defined position there is furthermore a big risk that the franking machine, at its hard impact against the envelope surface, will tear up the envelope surface, if the stamp hits the edge of the object, which means that disc or diskette may fall out of the parcel whereupon it in many occasions can not be delivered to the correct addressee.

Furthermore it is important that the parcel is not bent, and finally it is essential that static electricity is not generated in the parcel, as this might result in demagnetizing of a data diskette. The risk for generation of static electricity is evident with a plastic diskette, which can move in the parcel.

Data diskettes earlier have been stored, to a large extent, in especially manufactured register boxes, but there is also a need for a storage system, which can be combined with conventional storage folders and ring binders or the like. There are similar needs for compact discs.

### Purpose and most essential features of the invention

The purpose of the present invention is to provide a simple and inexpensive but at the same time efficient cover for flat or planar objects, such as compact discs and data diskettes, which can be used for transport as well as for storage, and which protects the object and keeps it in position, and this has been obtained with a transport and storage cover according to the characterizing part of the accompanying claim 1.
At the same time the invention provides a method for manufacturing such covers, and the characterizing features of this method are defined in claim 9.

### Description of drawings

Hereinafter the invention will be further described with reference to embodiments shown in the accompanying drawings.
Fig. 1 shows a planar view of a blank for manufacture of a cover according to the invention.
Fig. 2 is a perspective view of the cover according to the invention as seen from the front thereof and which cover is intended for a data diskette.
Fig. 3 shows the cover according to the invention as seen in perspective from the rear side thereof.
Fig. 4 shows how a cover according to the invention with a data diskette inserted therein, can be enveloped in an ordinary simple envelope.
Fig. 5 shows in perspective corresponding to Fig. 2 a cover intended for a compact disc, and
Fig. 6 is a perspective view of the rear of the compact disc cover according to Fig. 5.

### Description of embodiments

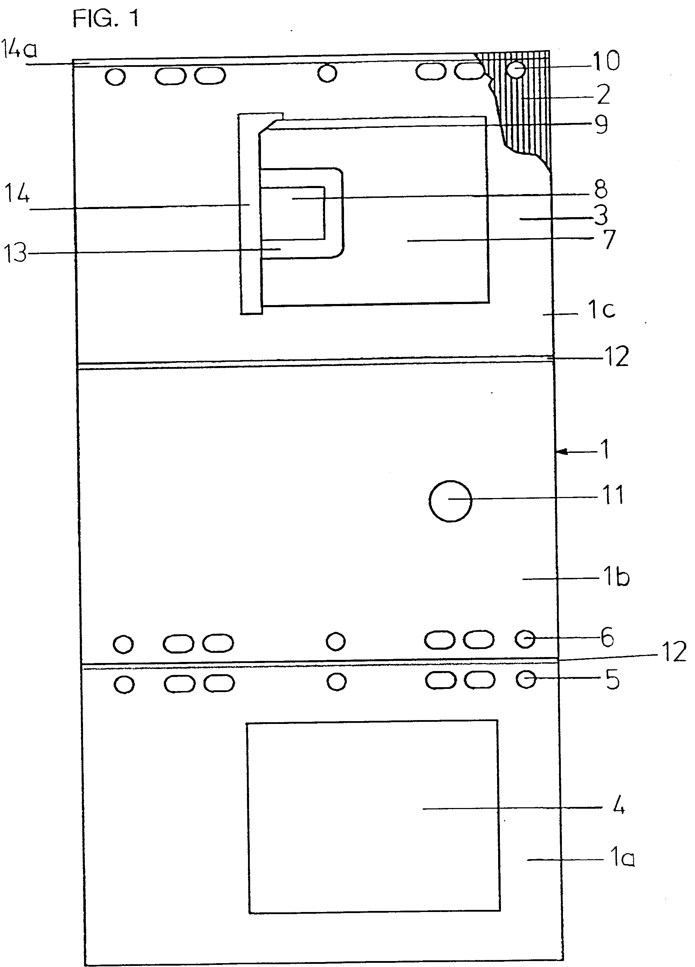

In Fig. 1 is shown in a planar view a blank for a transport and storage cover for a data diskette or the like. The blank is a rectangular corrugated fibreboard 1, provided with flute tops and flute bottoms 2 extending in the longitudinal direction of the board, a (not visible) thin carrier layer fitted to the lower side as seen in the figure and on the upper side provided with a pasted planar liner 3, partly cut away in the figure.

The board 1 is processed in a combined punching and crushing machine (not shown), whereby in a first portion 1a of the board is punched out a square through-opening 4, the side of which is just somewhat longer than the corresponding side of a diskette intended to be contained in the cover. Along the free edge of this first portion 1a, facing outwards, away from the other part of the board, there are punched out, at a short distance inside the edge, a number of slot-formed and round through openings 5, intended as holes for most of the existing ring binders or the like. In a second portion 1b of the board, which is adjacent said first portion 1a, there is punched out in a similar manner a number of openings 6 corresponding to the slot-formed and round openings 5 in the first portion 1a, and being positioned along the side edge of the second portion 1b facing away from the first portion 1a, and in positions corresponding to those of the openings 5. In the second portion 1b there is furthermore punched out a hole 11, in the embodiment shown of round shape, and which is situated aligned with the square opening 4 in the first portion 1a.

A third portion 1c, having a size and shape essentially corresponding to the portions 1a and 1b, has one of its sides adjacent to edge provided with the slot-formed openings 6. This third portion 1c is provided with a punched out through-opening 7, situated at the corresponding level, as the square opening 4 in the first portion 1a. This opening 7 has a square basic shape of somewhat smaller dimesnion than the opening 4 i the first portion 1a, and has furthermore a tab 8 projecting inwards from one side, said tab preferably having a rectangular shape and extending inwards towards the center of opening 7, whereas it ends before reaching the center of the opening. The intermediate portion between the side of the opening 7 equipped with the tab 8 and its adjacent edges are furthermore punched out obliquely, thus that at least one inwardly projecting triangular side flap 9 is obtained.

Along its edge adjacent the second portion 1b, this third portion 1c is also equipped with a number of openings 10 of shape and location corresponding to the openings 5 and 6 in the first and second portions. All those punched out openings are made in a single punching operation by means of a blanking tool of a type not described in detail.

Between the portions 1a, 1b and 1b, 1c resp. adjacent to each other in the board 1, there are also intimated thinner material portions 12 acting as folding lines, which are formed during the punching operation by means of crushing members arranged in connection with the blanking tool, preferably in form of metallic ledgers, which during the punching operation cause a compression of the flute tops of the corrugated fibreboard, thus that those are crushed.

Furthermore the tab 8 projecting into the opening 7 in the third portion 1c has an outer section 13, which in a similar manner has crushed flute tops and in the portion immediately below the tab 8 in the third portion 1c there is preferably a thin rectangular, band-shaped portion 14 of crushed flute tops, which extends mainly in parallel with the side of the opening 7 equipped with the tab 8, and it has a height substantially corresponding to the distance between said edge in the opening 7 and the corresponding edge in the somewhat bigger opening 4 in the first portion 1a. Finally there is along the free edge of the third portion 1c a band-shaped thinner material portion 14a. The portions 13, 14 and 14a made in form of crushed flute tops are produced during the punching operation by means of rubber blocks or similar formations inserted in the blanking tool.
In a subsequent manufacturing step, points on the surface of portions 1a and 1c are coated with an appropriate adhesive, e.g. a glue, whereupon the three portions 1a, 1b, 1c are folded along the folding lines as defined by the crushed portions 12, thus that the three portions 1a, 1b and 1c will be situated in a three layer pile with the first portion 1a situated between the portions 1b and 1c and with the lined sides of the portions 1b and 1c turned outwards, and which pile upon compression and curing of the glue coatings at the different portions will form a cover 15 formed as a three layer plate of the type shown in Fig.s 2 and 3.

The material thickness in the corrugated fibreboard blank corresponds mainly to half the thickness of a data diskette of the type in question.

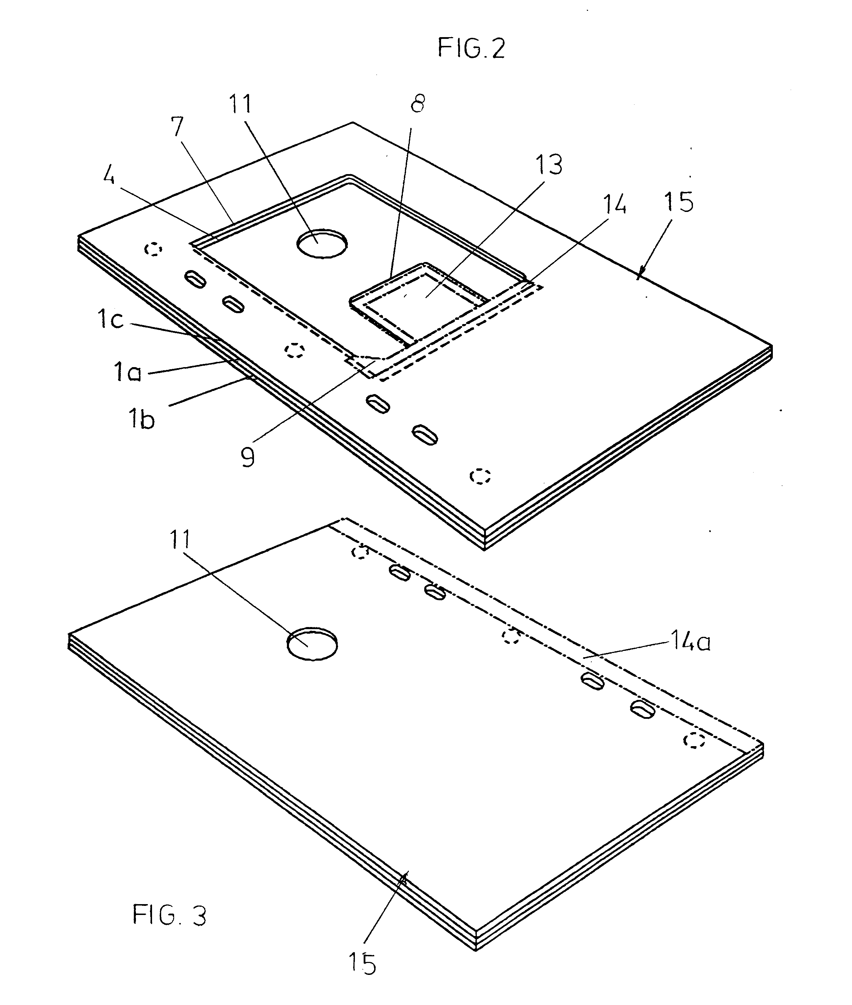

As can be seen from Fig. 2, which shows the front of the cover 15 in perspective and with dash-and-dot lines, representing said crushed flute tops, the openings 4 and 7 are situated just in front of each other and with the somewhat bigger opening 4 situated inside the somewhat smaller, with the opening 7 equipped with the tab 8 and with the round through-hole 11 situated inside said openings 4 and 7. As the edges of the opening 7 project somewhat inside the edges of the underlying opening 4, a data diskette, which is positioned in the openings 4,7 will be retained by the outer opening 7 without being urged outwards by the edges of the somewhat bigger opening 4 situated inside the smaller opening. By means of the thinner material portion of the tab 8, which is turned inwards, when the cover has been folded and glued, and which has been obtained by the crushed portion 13, and by the thinner material portion of the under-laying portion 14, it will be possible to insert the diskette with one of its edges inside the tab, without the tab thereby being angled outwards. This structure at the same time makes it possible to move the diskette to a completely planar position recessed in the cover, and to a position where the thinner material portion 14 of the underlying material gives a possibility for the diskette to be positioned somewhat angled upwards.
The tab 8 protects the most vulnerable part of the data diskette, i.e. said shutter.

Through the hole 11 in the underlaying portion 1b it is possible to remove the diskette from the cover in a simple manner by pressing a finger through the hole against the rear side of the diskette. Otherwise the diskette is protected and well retained in the openings 4,7, behind the tab 8, and behind the triangular side flap 9.

In Fig. 3 is shown in perspective the rear side of the cover 15, with the hole 11 and with the thinner material portion 12, shaped as a band of crushed flute tops in the corrugated fibreboard and arranged along the edge provided with the slot-formed openings 10, whereby aligned with the slot-formed openings 10 in the under-laying layers are arranged corresponding slot-formed openings 5 and 6 resp.

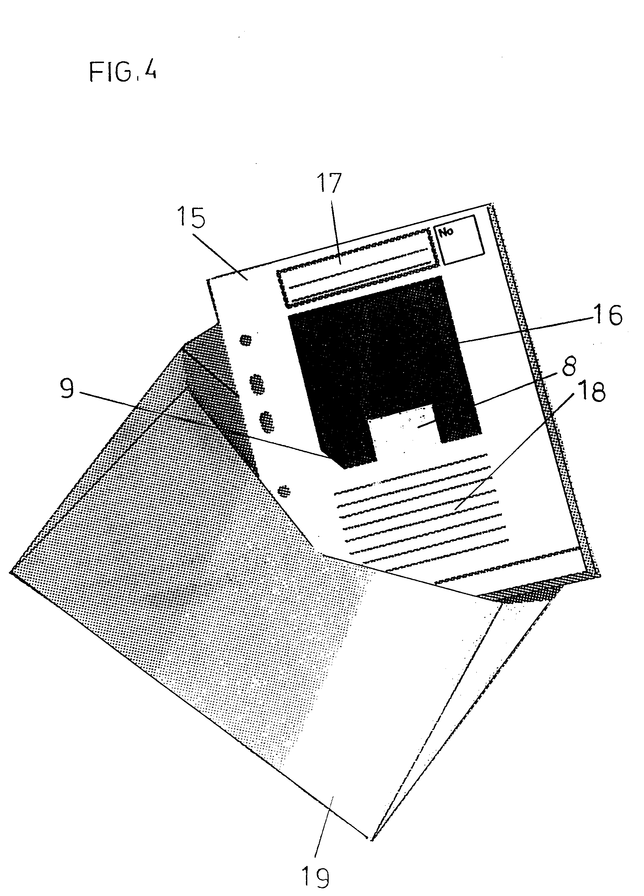

In Fig. 4 is shown in perspective how a data diskette cover 15 according to the invention holds a data diskette 16 inserted therein. As can be seen from this figure the front of the cover may preferably be provided with titel boxes 17 and index 18, and it also can be seen how the cover 15, e.g. for conveyance by post, may be inserted in an ordinary, simple envelope 19 without need for padding, as the cover with its structure of corrugated fibreboard efficiently will protect the diskette, which at the same time lays in a fixed position in the recess formed by the openings 4, 7.
Furthermore the cover with diskette can be inserted in an index box of conventional type, and/or be inserted in a ring binder or the like.

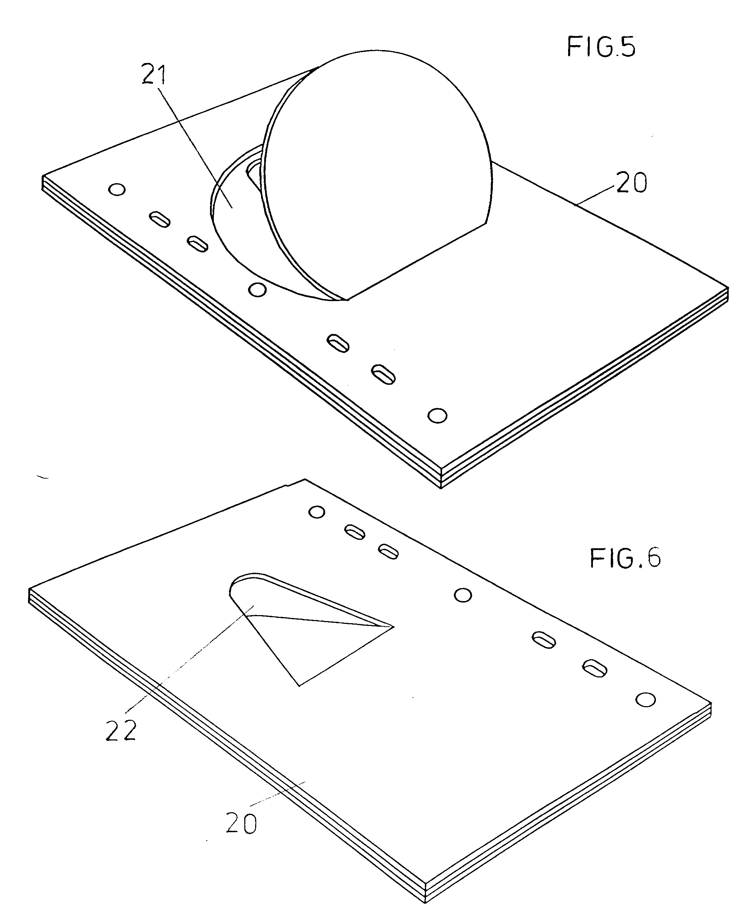

In Fig. 5 is shown in perspective the front of a cover 20 according to the invention, which differs from that according to Fig.s. 1-4 in that its opening 21 is shaped after the contour of a round object, such as a compact disc. Fig. 6, which shows the rear side of the cover according to Fig. 5, shows a substantially triangular through-hole 22, corresponding to the hole 11 at the embodiment according to Fig.s 1-4 and which like this is intended for facilitating removal of the object from the cover.

The invention is not limited to the embodiments shown and described in connection therewith, but modifications are possible within the scope of the accompanying claims.

## Claims

1. A transport and storage cover for flat objects, such as compact discs and data diskettes,
**characterized therein**,
that it incorporates a comparatively shape stiff, multilayer plate (15), which in one of its flat sides is provided with an opening (7,4;21) with an outer dimension and shape (7;21) substantially corresponding to the outer dimension and shape of an object (16) intended to be positioned in said opening, the depth of the opening (7,4;21) being substantially equal to the thickness of an object, that the inner part of the opening (4) is congruent with the outer part of the opening (7) but is somewhat bigger than this, and that at the outer part of the opening (7;21) there is at least one tab (8) or flap (9;22) projecting inwards, and adapted to contribute to the retainment of the object positioned in the opening.

2. A cover according to claim 1,
**characterized** **therein**,
that the material in the plate (15) consists of a number of layers (1a,1b,1c) of corrugated fibreboard, whereby the outer opening (7;21) extends through one of the layers (1c), whereas the inner part of the opening (4) extends through another layer (1a).

3. A cover according to claim 2,
**characterized therein**,
that the layers (1a,1b,1c) of the plate (15) consist of a continuous disc (1), which is folded to multi layer form with a number of mutually substantially parallel folding lines (12).

4. A cover as claimed in claim 3,
**characterized therein,**
that the flute tops (2) of the corrugated fibreboard extend essentially perpendicularly to the folding lines between said layers (1a,1b,1c).

5. A cover according to claim 4,
**characterized** **therein**,
that the folding lines are constituted by bands (12) of crushed portions of the flute tops of the corrugated fibreboard, made perpendicular to the extension of the flute tops.

6. A cover as claimed in anyone of claims 2-5,
**characterized** **therein**,
that the tab (8) projecting into the opening, on its side turned inwards, is provided with a thinner portion (13), situated at the outer part of the tab and constituted by crushed portions of the flute tops (2) of the corrugated fibreboard.

7. A cover as claimed in anyone of claims 2-6,
**characterized** **therein**,
that the portion (1c) carrying the tab (8) is provided with a thinner material portion (14) immediately below said tab, and in form of crushed portions of the flute tops (2) of the corrugated fibreboards, said thinner material portion having a height corresponding to the distance between the adjacent edge of the opening (7) in this portion (1c) and the adjacent edge of the opening (4) in the first portion (1a).

8. A cover as claimed in anyone of the preceeding claims,
**characterized** **therein**,
that the layer (1b) or layers situated behind the two cover layers (1a,1c) equipped with openings (4,7;21), is/are equipped with a through-hole (11;22) for allowing simple removal of the object from the cover.

9. A method for manufacturing transport and storage covers according to claim 1,
**characterized** **therein**,
that the cover is manufactured from a planar disc of corrugated fibreboard (1) by being given in a single punching operation a number of through-punchings (4,7,11,5,6,10) arranged in continous portions (1a,1b,1c) separated by folding lines,
that during the punching operation by means of crushing members inserted in the blanking tool at the same time is made portions (12,13,14) of crushed flute tops of the corrugated fibreboard, some of which portions are made as elongated bands (12) forming said folding lines,
that the corrugated fibreboard disc (1), which is subdivided in portions (1a,1b,1c) by said folding lines, are provided with adhesive, and
that the corrugated fibreboard disc (1) thereupon is folded to a multilayer form along said folding lines, and is compressed until said adhesive has been cured and thereby causes the layers (1a,1b,1c) to be held together to a cover (15).
